(19) Europäisches Patentamt
European Patent Office
Office européen des brevets

(11) EP 0 792 296 B1

(12) **EUROPEAN PATENT SPECIFICATION**

(45) Date of publication and mention
of the grant of the patent:
**16.06.1999 Bulletin 1999/24**

(21) Application number: 95936797.0

(22) Date of filing: 31.10.1995

(51) Int Cl.$^6$: **C08F 10/00**, C08F 4/602

(86) International application number:
**PCT/NL95/00376**

(87) International publication number:
**WO 96/15161 (23.05.1996 Gazette 1996/23)**

(54) **PROCESS FOR THE PREPARATION OF A RUBBER-LIKE COPOLYMER**

VERFAHREN ZUR HERSTELLUNG VON KAUTSCHUKARTIGEM COPOLYMER

PROCEDE POUR LA PREPARATION D'UN COPOLYMERE SEMBLABLE A DU CAOUTCHOUC

(84) Designated Contracting States:
**DE FR IT NL**

(30) Priority: **14.11.1994 NL 9401893**

(43) Date of publication of application:
**03.09.1997 Bulletin 1997/36**

(73) Proprietor: **DSM N.V.**
**6411 TE Heerlen (NL)**

(72) Inventors:
• **RENKEMA, Jacob**
**NL-6141 BW Sittard (NL)**
• **MUSKENS, Bernardus, Johanna**
**NL-6166 JB Geleen (NL)**

(56) References cited:
EP-A- 0 021 753      EP-A- 0 653 443
DE-A- 1 520 865      DE-B- 1 296 796
FR-A- 1 327 965      US-A- 3 418 304

• **DATABASE WPI Derwent Publications Ltd.,**
**London, GB; AN 85-078309 & JP,A,60 031 503**
**(OSAKA SODA KK)**

## Description

The invention relates to a process for the preparation of a rubber-like copolymer of ethene, one or more $\alpha$-olefins and optionally one or more polyunsaturated compounds under the influence of a catalyst system comprising a transition metal compound, the transition metal being chosen from groups 3-6 of the Periodic System of the Elements, an organometal compound and optionally a promoter.

A process with such a catalyst system is already known from EP-A-44,119. By means of such a catalyst system amorphous ethene/$\alpha$-olefin copolymers (also known as EAM rubbers) as well as amorphous ethene/$\alpha$-olefin/diene terpolymers (also known as EADM rubbers) can be obtained. Propene is often used as $\alpha$-olefin, in which case EP or EPDM rubbers are obtained. However, the rubbers so obtained have a narrow molecular weight distribution (MWD) and a narrow composition distribution. The latter means that nearly all the molecular chains have the same composition. Here and in the following a narrow MWD is understood to mean an MWD of less than 5. Using such a catalyst, it is not really feasible to produce rubbers having a (very) wide MWD. A narrow MWD as well as a narrow composition distribution are as such important in bringing about a high vulcanization degree of the rubbers in a vulcanization reaction at a later stage. Such a high vulcanization degree in turn is important with a view to ensuring good properties of the vulcanized final product. Rubbers with a narrow MWD and a narrow composition distribution also have a number of drawbacks, however. The flow behaviour of such rubbers is poor and consequently they cannot be extruded or only with very poor results. Another drawback is the poor mixing behaviour of these rubbers in further processing; also see Noordermeer and Wilms, Kautschuk, Gummi & Kunststoffe, vol. 41(6), 1988, pp. 558-563.

In EP-A-21 753 a method for the production of high crystalline olefin polymers is disclosed which uses a catalyst system comprising an organo metal amido complex and a trivalent titanium halide. However, no suggestions for a process for the preparation of rubber-like copolymers of the present invention are given.

The object of the invention is to provide a process with which rubbers having a (very) wide MWD can be produced.

This object is achieved by the process as defined in claim 1, wherein the organometal compound in the catalyst system to be used in the process is an amido complex that answers the general formula

$$R_u\text{-Me}^1\text{-X}^1{}_v\text{-(NR}^1R^2)_w \qquad\qquad (I)$$

where $\text{Me}^1$ is a metal chosen from group 1, 2, 12 or 13 of the Periodic System of the Elements, each R separately represents a hydrocarbon group having 1-20 C-atoms, $NR^1R^2$ is an amido group, with $R^1$ and $R^2$, bridged or not bridged, being the same or different and representing hydrogen or a hydrocarbon group having 1-20 C-atoms or a group of the general formula $MR^3{}_3$, where M is an element that has been chosen from group 14 of the Periodic System of the Elements, each $R^3$ separately represents hydrogen, a hydrocarbon group having 1-20 C-atoms or a group containing a hetero atom, the hetero atom having been chosen from the group comprising N, O, P, S or halogen, $X^1$ is a halogen atom, $u+v+w=p$ and $0<w\leq p$, p representing the valency of $\text{Me}^1$.

The organometal compound (also referred to as 'co-catalyst') may be present in monomeric as well as in oligomeric form.

Due to the presence of the organometal compound (I) in the catalyst system, rubbers with a (very) wide MWD can be obtained. The rubbers consequently have excellent extrusion and mixing characteristics. Here and in the following the present patent application in all cases refers to a molecular weight distribution, because the molecular weight distribution can be determined easier and more univocally than the composition distribution. Actually, a widening of the distribution in general occurs, i.e. the composition distribution as well as the molecular weight distribution.

The hydrocarbon group in each of the groups of formula (I) is understood to be an alkyl, aryl, acyl, cycloalkyl, cycloaryl or cycloacyl group. Hydrocarbon groups with one or more functional groups, such as halogen atoms, -OH, -OR, -COOH, -COOR or $-NH_2$ groups, may also be used.

$\text{Me}^1$ preferably is aluminium. $X^1$ preferably is chlorine. Preferably, too, $w\geq0.5$. The bridge that may be present between $R^1$ and $R^2$ may be a hydrocarbon group; silicon-, oxygen-containing groups are also possible.

M in the $MR^3{}_3$ group preferably is Si. Each $R^3$ separately may be a hydrocarbon group having 1-20 C-atoms, as well as a group containing a hetero atom, the hetero atom having been chosen from the group comprising N, O, P and S or halogen. Thus, each $R^3$ separately may for instance also be an alkoxy, aryloxy, amine, amide group, an S compound, e.g. sulphide, sulphite, sulphate, thiol, sulphinate, a P compound, such as phosphine, phosphite, phosphate.

To prepare compound (I), aluminium having been chosen as $\text{Me}^1$ (so an aluminium amido complex), an organoaluminium compound and an amine can be started from for instance. A process for the preparation of such an aluminium amido complex is described in M. Cohen, J.K. Gilbert, J.D. Smith, J. Chem. Soc.,**1965**, 1092 and in J.K.

Gilbert, J.D. Smith, J. Chem. Com (A), **1968**, 233. These aluminium amido complexes are of the general formula

$$R_u\text{-}Al\text{-}X_v\text{-}(NR^1R^2)_w \qquad (I')$$

where v=0, w>0, u+v+w=3.

When they do not yet contain halogenide, these aluminium amido complexes can be reacted with organoaluminium halogenides to give halogen-containing amido complexes of the general formula

$$R_u\text{-}Al\text{-}X_v\text{-}(NR^1R^2)_w \qquad (I'')$$

where v≠0, w>0 and u+v+w=3.

The catalyst system may contain an additional organometal compound of the following general formula:

$$R^4{}_x\text{-}Me^2\text{-}X^2{}_{p\text{-}x} \qquad (II)$$

where $Me^2$ is chosen from group 1, 2, 12 or 13 of the Periodic System of the Elements, each $R^4$ separately represents hydrogen or a hydrocarbon group having 1-20 C-atoms, $X^2$ is a halogen atom, x≤p, and p represents the valency of $Me^2$.

This means an additional tool for control of the MWD. So the rubbers prepared in this way can in fact be made to measure.

Preferably, aluminium is again chosen as $Me^2$. $X^2$ preferably is chlorine. In particular, x≥1 in (II). The most suitable compounds to be used as compound (II) are ethyl aluminium dichloride (MEAC), sesquiethyl aluminium chloride (SEAC) and/or diethyl aluminium chloride (DEAC).

By varying the quantities and the ratios of compounds (I) and (II) the MWD can be varied infinitely from narrow to very wide. It has been found that the higher the proportion of compound I in the catalyst system is, the wider the MWD becomes.

The catalyst system to be used in the process according to the invention also comprises a transition metal compound, the transition metal being chosen from groups 3-6 of the Periodic System of the Elements, such as scandium, yttrium, titanium, zirconium, hafnium, vanadium, niobium, tantalum en chromium. Preferably, the transition metal is chosen from group 5. In particular, vanadium is chosen as transition metal. Examples of suitable compounds are the halogenides, oxyhalogenides, the alkoxides and the acetyl acetonates, such as vanadium tetrachloride, vanadium oxytrichloride and vanadium acetylacetonate. Imidoaryl complexes of transition metals may also be used. Such complexes are described in EP-A-532,098. Preference is given to transition metal compounds that are soluble in the polymerization medium.

The presence of a promoter enhances the activity of the catalyst system. The presence of a promoter also has an effect on the MWD. The higher the amount of promoter that is present, the narrower the MWD becomes. Preferably, a promoter : transition metal molar ratio < 4 is applied. In particular, the promoter : transition metal molar ratio is <2. Suitable promoters are halogenated compounds, such as trichloroacetic acid or esters thereof, hexachloroacetone, hexachloropropene, α-trichlorotoluene or perchlorocrotonic acid compounds. These compounds have a high chlorine content, however. In order to prevent the occurrence of an unduly high chlorine content in the rubber-like copolymer to be prepared, the specific, low halogen content compounds suggested as promoter in EP-A-44,119 may be used. Preferably, these are compounds with not more than two halogen atoms per molecule. Examples of such compounds are the alkyl or alkoxyalkyl esters of phenyl, mono- or dihalogen acetic acid.

As indicated, the invention relates to a process in which a catalyst system according to the invention is used in the preparation of a rubber-like copolymer of ethene, one or more α-olefins and optionally one or more polyunsaturated compounds, e.g. in a liquid-phase polymerization reaction. Here and in the following a rubber-like copolymer is understood to be a copolymer which at room temperature and upwards has a crystallinity of at most 10%, measured by means of DSC (differential scanning calorimetry).

As α-olefins suitable to be used as monomer besides ethene can be mentioned: propene, butene-1, pentene-1, hexene-1, octene-1 or the branched isomers of these, such as 4-methyl pentene-1, as well as styrene and α-methyl styrene. Mixtures of these alkenes can also be used; preference is given to propene and/or butene-1.

The purpose of the polyunsaturated compound, which contains at least two C=C bonds and may be aliphatic as well as alicyclic, is to introduce unsaturation into the copolymer. Aliphatic polyunsaturated compounds in general contain 3 to 20 carbon atoms, the double bonds being either conjugated or, preferably, non-conjugated. Examples of such compounds are: 1,3-butadiene, isoprene, 2,3-dimethyl butadiene-1,3, 2-ethyl butadiene-1,3, piperylene, mycrene, allene, 1,2-butadiene, 1,4,9-decatrienes, 1,4-hexadiene, 1,5-hexadiene and 4-methyl hexadiene-1,4. Alicyclic polyunsaturated compounds, which may or may not comprise a bridge group, may be monocyclic as well as polycyclic. Examples of such compounds are norbornadiene and its alkyl derivatives; the alkylidene norbornenes, in particular the 5-alkylidene norbornenes-2, in which the alkylidene group contains 1 to 20, preferably 1 to 8 carbon atoms; the alkenyl norbornenes, in particular the 5-alkenyl norbornenes-2, in which the alkenyl group contains 2 to 20, preferably 2 to 10 carbon atoms, for instance vinyl norbornene, 5-(2'-methyl-2'butenyl)-norbornene-2 and 5-(3'-methyl-2'butenyl)-norbornene-2; dicyclopentadiene and the polyunsaturated compounds of bicyclo-(2,2,1)-heptane, bicyclo-(2,2,2)-octane, bicyclo-(3,2,1)-octane and bicyclo-(3,2,2)-nonane, at least one of the rings being unsaturated. Further, compounds such as 4,7,8,9-tetrahydroindene and isopropylidene tetrahydroindene may be used. In particular, dicyclopentadiene, vinyl norbornene, 5-methylene- or 5-ethylidene norbornene-2 or hexadiene-1,4 are applied. Mixtures of the compounds mentioned in the foregoing may also be used.

The polyunsaturated compound may be present in the copolymer in quantities of up to 30 wt.%, preferably, however, up to 15 wt.%.

In addition to or instead of the diene an unsaturated compound with one or more functional groups, such as halogen atoms, -OH, -OR, -COOH, -COOR or -NH$_2$ groups, may also be incorporated into the copolymer, in a quantity of up to 20 wt.%.

The molar ratio of the polymers applied depends on the desired composition of the polymer. As the monomers have highly different polymerization rates, it is not possible to give generally applicable molar ratio ranges. However, for the copolymerization of ethene and propene a molar ratio between 1 : 1 and 1 : 50 will generally be chosen. If a polyunsaturated compound is copolymerized, its molar ratio relative to ethene will mostly be between 0.0001 : 1 and 1 : 1.

The polymerization reaction is usually carried out at a temperature between -40° and 200°C, preferably between 10° and 80°C. The pressure will usually be 0.1-5 MPa, but it is also possible to operate at higher or lower pressures. The process is preferably carried out continuously, but it can also be carried out semicontinuously or batchwise.

The residence time involved may vary from a few seconds to a few hours. In general a residence time between a few minutes and one hour will be chosen. Variation of the residence time in the reactor also provides a way to control the MWD. The longer the residence time, the wider the MWD.

The polymerization may take place in a liquid which is inert in respect of the catalyst system, for instance one or more saturated aliphatic hydrocarbons, such as butane, pentane, hexane, heptane, pentamethyl heptane or petroleum fractions; aromatic hydrocarbons, for instance benzene or toluene, or halogenated aliphatic or aromatic hydrocarbons, for instance tetrachloroethylene. It is possible to operate at such a temperature and pressure that one or more of the monomers applied, in particular the $\alpha$-olefin, for instance propene, is liquid and is present in such a large quantity that it serves as dispersing agent. An additional dispersing agent will not be needed then. The process according to the invention may be carried out in a polymerization reactor filled with gas and liquid, as well as in a reactor completely filled with liquid. The use of a completely or partially heterogenized catalyst system makes it possible to carry out the polymerization process in suspension or in the gas phase.

The molecular weight can moreover be set, in addition to the possibilities already mentioned, by means of techniques known to the person skilled in the art. In particular, this may be effected through application of chain length regulators, such as diethyl zinc and, preferably, hydrogen. Very small amounts of hydrogen already influence the molecular weight to a sufficient degree.

Surprisingly, it has been found that the catalyst system described in the foregoing is highly suitable to be used in liquid-phase processes at room temperature or even higher temperatures, so that, in contrast to the conventional liquid-phase processes, the heat of reaction can be removed more efficiently. This can be effected, as is known, by strong cooling of the feed to the reactor, as well as by evaporating part of the reaction medium. Upon completion of the polymerization the polymer can be worked up in several ways. Evaporation of the solvent as well as steam coagulation are suitable for this purpose in the case of liquid-phase processes.

The copolymers produced by the process according to the invention generally contain between 25 and 85 wt.% of ethene. However, preference is given to products with an ethene content between 40 and 75 wt.%. The main advantage of the use of a catalyst system according to the invention is that rubbers with a very wide MWD, larger than 5 and even >20 higher can be obtained (in a single reactor). It has been found moreover that if compound (II) and/or the promoter (as well) is/are present, the MWD is infinitely adjustable, i.e. each MWD can be obtained.

Such copolymers are suitable for many applications, e.g. for the manufacture of hoses, cables, conveyor belts, sealing profiles. Optionally, they can be vulcanized by the customary methods with utilization of substances yielding free radicals, such as peroxides, or with sulphur. These copolymers have excellent processing properties. The customary techniques used to make a rubber processable can also be applied to these copolymers. For instance, the polymer can be blended with oil; this is preferably done after the polymerization. Further, agents can be added which make it possible to obtain friable bales. This can be achieved for instance by adding talcum or another substance or by making use of a system as described in EP-A-427.339. The composition described in EP-A-427.339, comprising a thickening agent and an anionic dispersion agent, has been found to be very suitable for the products according to the invention.

The invention will be elucidated by means of the following, non-restrictive examples and comparative experiments.

Using Fourier transformation infrared spectroscopy (FT-IR), the composition of the polymers was determined in accordance with the method that is customary in the rubber industry. The FT-IR measurement gives the composition of the copolymer in monomer unit weight percentages. The composition of the copolymer determined with FT-IR is expressed in weight percentages of propene units ($\%C_3$) in the examples. The molecular weight was determined using size exclusion chromatography-differential viscosimetry (SEC-DV). By means of SEC-DV the number-average molecular weight ($M_n$), the weight-average molecular weight ($M_w$), the z-average molecular weight ($M_z$) and the molecular weight distribution (MWD = $M_w/M_n$) were determined.

By means of differential scanning calorimetry (DSC) the crystallization behaviour of the copolymers obtained was determined. After heating the preparation rapidly to 200°C and a waiting time of 5 minutes at this temperature, the preparation is cooled at a rate of 10°C/minute to -70°C. The thermal effects occurring during this process are registered, such as the crystallization point (T in °C) and the crystallization enthalpy ($\Delta H$ in kJ/kg) of a polymer. The crystallinity of the polymer is derived from the melt enthalpy above 20°C [$(\Delta H/297)*100\%$] and is expressed in %. The Mooney $M_L(1+4)$ of the copolymer is determined in accordance with ISO 289 at a temperature of 125°C. The yield of polymer in the examples is expressed in g of copolymer per mmol of transition metal. The abbreviation 'nd' in the tables means 'not determined'.

## Examples

### Preparation of the compounds of formula I

Series of examples were carried out, each time using different compounds of formula I, referred to in the following as 'Al-amido'. These Al-amidos were prepared by reacting triethyl aluminium (TEA) with an amine. In this reaction a gas (ethane) was released. The reaction took place at room temperature (in the case of aromatic amines) and at approx. 80°C (in the case of aliphatic amines). The reaction yielded diethyl aluminium amido (DEAN). By mixing one equivalent of DEAN with one equivalent of monoethyl aluminium dichloride the Al-amido (SEAC-N), $Et_{1,5}Al_1Cl_1(NR^1R^2)_{0,5}$, was formed.

### Batch polymerizations

A glass 1.5-litre autoclave was filled with 300 ml of (special boiling point) gasoline and compound I and, optionally, compound II. The reactor was pressurized to 0.8 MPa with purified monomers and so conditioned that the propene : ethene ratio in the gas cap was 2:1. The temperature of the reactor was about 30°C.

After conditioning of the reactor the transition metal compound and, optionally, the promoter were dosed to the reactor by means of a pump. During the polymerization the monomer concentrations were kept as constant as possible by supplying propene (200 Nl/h) and ethene (100 Nl/h) to the reactor.

After some minutes (standard time is 10 minutes) the reactor was depressurized, the solution was collected and dried. In each case an amorphous copolymer of ethene and propene was obtained.

### Example I

### Use of different compounds I

The amines listed in Table 1 are the amines that were used in the preparation of the Al-amidos. The results of the batch polymerizations are also presented in Table 1. Example I.1 is the blank example.

The transition metal compound used was vanadium trichloride ($VOCl_3$) (50 μmol). The Al-amido (compound I) was used in a quantity of 150 μmol. Compound II was sesquiethyl aluminium chloride (SEAC), 150 μmol. Al-amido = $(Ethyl)_{1,5}Al(Cl)(amido)_{0,5}$ (SEAC-N).

Table 1

| | amine | yield (g/ mmol) | %C$_3$ (wt.%) | Mn (kg/ kmol) | Mw (kg/ kmol) | Mz (kg/ kmol) | MWD | DSC Tk (°C) | DSC cryst. (%) |
|---|---|---|---|---|---|---|---|---|---|
| I.1 | none (blank) | 190 | 41 | 230 | 430 | 710 | 1.9 | -8 | 0.1 |
| 1.2 | aniline | 202 | 44 | 22 | 1100 | 4800 | 50 | -18 | 0.3 |
| I.3 | ethyl aniline | 200 | 44 | 28 | 1320 | 7250 | 47 | -19 | 0.3 |
| I.4 | diethyl amine | 124 | 43 | 24 | 700 | 2700 | 29 | -15 | 0.3 |
| I.5 | diisobutyl amine | 176 | nd | 19 | 990 | 4900 | 52 | -15 | 0.3 |
| I.6 | hexamethyl disilazane | 204 | 44 | 65 | 1750 | 9800 | 27 | -9 | 0.3 |
| I.7 | methoxyethyl amine | 114 | nd | 135 | 1100 | 6800 | 8 | -2 | 0.5 |
| I.8 | methoxypropyl amine | 78 | 34 | 19 | 340 | 740 | 18 | 7 | 1 |
| I.9 | phenyl-NH-C$_6$H$_4$-NH-phenyl | 120 | nd | 220 | 2400 | 8100 | 11 | 7 | 2 |

From the first series of examples it appears that a wide range of Al-amidos can be used. Table 1 contains examples of aliphatic, aromatic, sterically small and large amines, amines with hetero atoms at the nitrogen, and of chelating amines (i.e. amines containing an additional functional group).

In all cases a substantial widening of the MWD is achieved. The degree of widening in part depends on the amine chosen.

Example II

Use of different transition metal complexes

The batch polymerizations of a second series of examples were carried out analogously to example I. Different transition metal compounds (V-compounds) were used. The results are presented in Table 2.

The V-compounds used were:

1 =    VOCl$_3$
2 =    vanadyl isopropylate (VO(OiPr)$_3$)
3 =    o,o-dimethyl phenylimido-VCl$_3$ in combination with 5 dichlorophenylacetic acid ethyl ester (DCPAE) as promoter

Table 2

| | V | amine | yield (g/ mmol) | %C$_3$ (wt.%) | Mn (kg/ kmol) | Mw (kg/ kmol) | Mz (kg/ kmol) | MWD | DSC Tk (°C) | DSC cryst. (%) |
|---|---|---|---|---|---|---|---|---|---|---|
| I.1 | 1 | none (blank) | 190 | 41 | 230 | 430 | 710 | 1.9 | -8 | 0.1 |
| II.1 | 1 | aniline | 202 | 44 | 22 | 1100 | 4800 | 50 | -18 | 0.3 |
| II.2 | 2 | aniline | 118 | 38 | 175 | 1310 | 7460 | 7.5 | 8 | 0.6 |
| II.3 | 1 | di-isobutyl amine | 176 | nb | 19 | 990 | 4900 | 52 | -15 | 0.3 |

Table 2   (continued)

| | V | amine | yield (g/ mmol) | %C$_3$ (wt.%) | Mn (kg/ kmol) | Mw (kg/ kmol) | Mz (kg/ kmol) | MWD | DSC Tk (°C) | DSC cryst. (%) |
|---|---|---|---|---|---|---|---|---|---|---|
| II.4 | 2 | di-isobutyl amine | 70 | 38 | 15 | 1100 | 5300 | 73 | 14 | 2 |
| II.5 | 3 | di-isobutyl amine | 282 | 45 | 47 | 310 | 560 | 6.6 | -11 | 0 |

From this series of examples it clearly appears that the distribution can be widened with different transition metal compounds.

Example III

Controlling of the MWD

A third series of examples was carried out analogously to example I. In this series the ratios between compound I and compound II were changed or the promoter (DCPAE) : transition metal ratio or the polymerization time was changed. The results are shown in Tables 3.1 and 3.2.
In table 1 'pol. time' means polymerization time.

Table 3.1

| | amine | comp.I (μmol) | comp. II (μmol) | VOCl$_3$ (μmol) | promoter (μmol) | pol. time (min) |
|---|---|---|---|---|---|---|
| I.1 | none (blank) | 0 | 300 | 50 | 0 | 10 |
| III.1 | aniline | 3 | 300 | 50 | 0 | 10 |
| III.2 | aniline | 150 | 150 | 50 | 0 | 10 |
| III.3 | aniline | 300 | 0 | 50 | 0 | 10 |
| III.4 | diethyl amine | 150 | 150 | 50 | 0 | 15 |
| III.5 | diethyl amine | 150 | 150 | 50 | 0.5 | 20 |
| III.6 | diethyl amine | 150 | 150 | 25 | 1 | 15 |
| III.7 | aniline | 150 | 150 | 50 | 0 | 2 |
| III.8 | aniline | 150 | 150 | 50 | 0 | 30 |

Table 3.2

| | yield (g/mmol) | Mn (kg/kmol) | Mw (kg/kmol) | Mz (kg/kmol) | MWD | Mz/Mw |
|---|---|---|---|---|---|---|
| I.1 | 190 | 230 | 430 | 710 | 1.9 | 1.7 |
| III.1 | 182 | 64 | 330 | 1050 | 5.2 | 3.2 |
| III.2 | 202 | 22 | 1100 | 4800 | 50 | 4.3 |
| III.3 | 280 | 12 | 1400 | 6000 | 117 | 4.3 |
| III.4 | 188 | 6 | 1100 | 5100 | 170 | 4.2 |
| III.5 | 220 | 10 | 710 | 3200 | 71 | 4.4 |
| III.6 | 260 | 16 | 320 | 950 | 20 | 3.0 |
| III.7 | 136 | 22 | 840 | 4000 | 39 | 4.8 |
| III.8 | 282 | 23 | 1400 | 6100 | 61 | 4.4 |

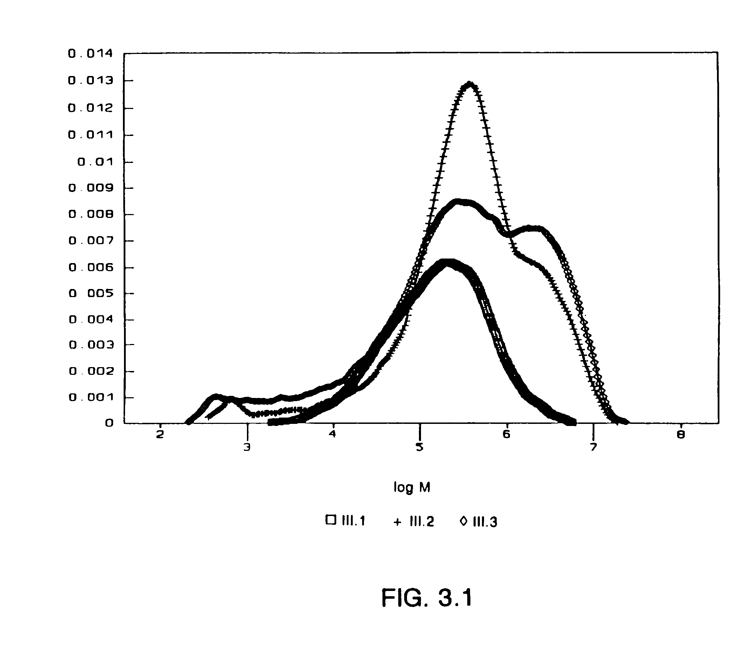

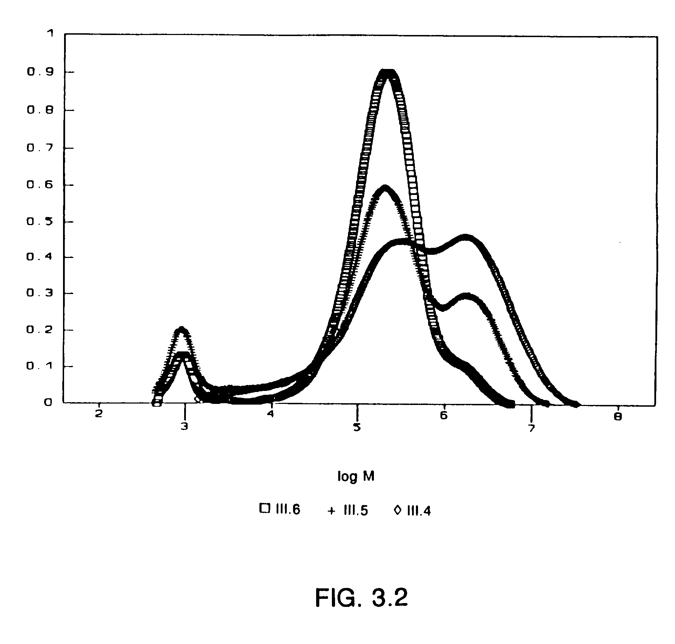

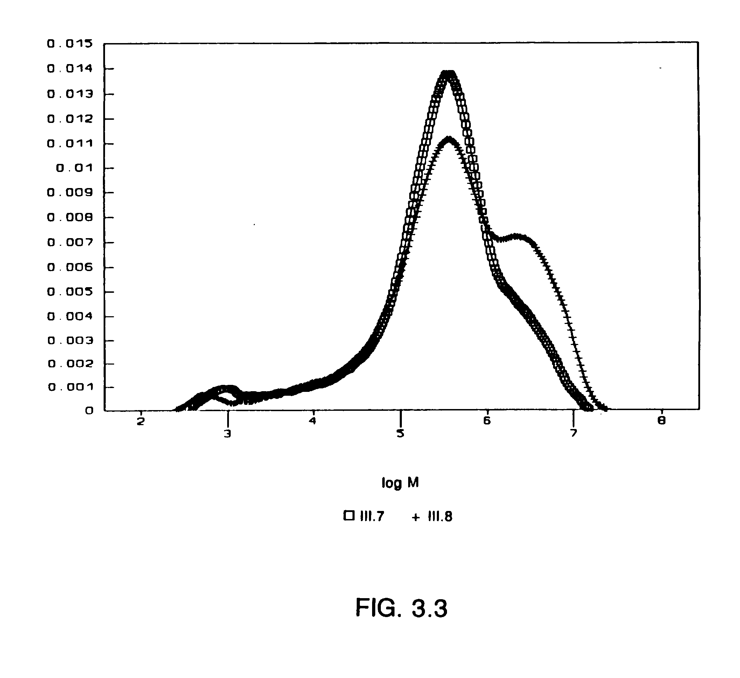

From examples III.1-III.3 it appears that the MWD can be controlled by varying the ratio between compound I and compound II. A very small amount of compound I (example III.1) already brings about a considerable widening of the distribution (see figure 3.1).

An additional advantage of the application of compound I is the higher yield that is obtained: compared with the blank (I.1) the yield is 50% higher (example III.3).

From examples III.4-III.6 it appears that the use of a promoter results in a narrowing of the distribution. This is illustrated in figure 3.2.

In addition, it appears that the polymerization time also is an important factor (examples II.7 and III.8). Extension of the polymerization time from 2 minutes to 30 minutes results in a widening of the distribution (see figure 3.3). It also causes the activity of the catalyst system (i.e. the yield per mmol of transition metal) to be enhanced.

In each figure, log M (obtained from SEC-DV) is plotted on the abscissa and the weight fraction on the ordinate.

Example IV

Continuous polymerizations

The polymerization conditions and polymer data of two continuous polymerization examples are presented in table 4. The flows of hexane, propene, ethene and catalyst components as stated in table 4.1 were supplied continuously to a 1.5-litre reactor. The abbreviation 'pol. time' in table 4.1 stands for the average retention time in the reactor. In example IV.1 the diene is vinyl norbornene, the example IV.2 the diene is ethylidene norbornene. The polymer solution was drained semicontinuously. The polymer was recovered by evaporation of solvent after deactivation of the catalyst by addition of an alcohol.

Compound I is $Et_{1.5}AlCl(NHphenyl)_{0.5}$. Compound II is SEAC.

Table 4.1

|  | $C_6$ (kg/h) | $C_3$ (Nl/h) | $C_2$ (Nl/h) | diene (ml/h) | $H_2$ (vol%) | $VOCl_3$ (mmol/h) | I (mmol/h) | II (mmol/h) | temp. (°C) | pol. time (min.) |
|---|---|---|---|---|---|---|---|---|---|---|
| IV.1 | 2.3 | 375 | 122 | 8.6 | 0.15 | 2.3 | 6.4 | 7 | 40 | 13 |
| IV.2 | 2.6 | 472 | 123 | 35.1 | 0.15 | 2 | 6 | 6 | 38 | 11 |

Table 4.2

|  | yield (g/h) | %$C_3$ (wt. %) | diene (wt. %) | Mn (kg/kmol) | Mw (kg/kmol) | Mz (kg/kmol) | MWD | Mooney 125°C |
|---|---|---|---|---|---|---|---|---|
| IV.1 | 190 | 42.0 | 1.2 | 13 | 175 | 780 | 14 | 24 |
| IV.2 | 220 | 37.5 | 9.5 | 17 | 210 | 1850 | 17 | 22 |

From table 4.2 it appears that an EPDM rubber with a wide MWD can be prepared by continuous polymerization with a catalyst according to the invention.

**Claims**

1. Process for the preparation of a rubber-like copolymer of ethene, one or more α-olefins and optionally one or more polyunsaturated compounds, which copolymer has a crystallinity, at room temperature and upwards, of at most 10% (measured by means of Differential Scanning Calorimetry), under the influence of a catalyst system comprising a transition metal compound, the transition metal being chosen from groups 3-6 of the Periodic System of the Elements, an organometal compound and optionally a promoter, characterized in that the organometal compound in the catalyst system to be used is an amido complex which answers the general formula

$$R_u\text{-}Me^1\text{-}X^1{}_v\text{-}(NR^1R^2)_w \tag{I}$$

where $Me^1$ is a metal chosen from group 1, 2, 12 or 13 of the Periodic System of the Elements, each R separately represents a hydrocarbon group having 1-20 C-atoms, $NR^1R^2$ is an amido group, with $R^1$ and $R^2$, bridged or not bridged, being the same or different and representing hydrogen or a hydrocarbon group having 1-20 C-atoms or a group of the general formula $MR^3_3$, where M is an element that has been chosen from group 14 of the Periodic System of the Elements, each $R^3$ separately represents hydrogen, a hydrocarbon group having 1-20 C-atoms or a group containing a hetero atom, the hetero atom having been chosen from the group comprising N, O, P, S or halogen, $X^1$ is a halogen atom, $u+v+w=p$ and $0<w<p$, p representing the valency of $Me^1$.

2. Process according to claim 1, characterized in that $Me^1$ is aluminium.

3. Process according to claim 1 or 2, characterized in that $X^1$ is chlorine.

4. Process according to any one of claims 1-3, characterized in that $w \geq 0.5$.

5. Process according to any one of claims 1-4, characterized in that in the catalyst system an additional organometal compound of the following general formula is present:

$$R^4_x\text{-}Me^2\text{-}X^2_{p\text{-}x} \qquad (II)$$

where $Me^2$ is chosen from group 1, 2 12 or 13 of the Periodic System of the Elements, each $R^4$ separately represents hydrogen or a hydrocarbon group having 1-20 C-atoms, $X^2$ is a halogen atom, $x \leq p$, and p represents the valency of $Me^2$.

6. Process according to claim 5, characterized in that $Me^2$ is aluminium.

7. Process according to claim 5 or 6, characterized in that $X^2$ is chlorine.

8. Process according to any one of claims 5-7, characterized in that in (II) $x \geq 1$.

9. Process according to any one of claims 1-8, characterized in that the transition metal is chosen from group 5.

10. Process according to claim 9, characterized in that the transition metal is vanadium.

11. Process according to any one of claims 1-10,
   characterized in that if a promoter is present, the promoter : transition metal molar ratio is <4.

12. Process according to claim 11, characterized in that the promoter : transition metal molar ratio is <2.

**Patentansprüche**

1. Verfahren zur Herstellung eines Kautschuk-artigen Copolymers von Ethen, einem oder mehreren $\alpha$-Olefinen und gegebenenfalls einer oder mehreren mehrfach ungesättigten Verbindungen, wobei das Copolymer eine Kristallinität bei Raumtemperatur und darüber von höchstens 10% hat (gemessen mittels Differentialscanningkalorimetrie), unter dem Einfluß eines Katalysatorsystems, das eine Übergangsmetallverbindung enthält, wobei das Übergangsmetall ausgewählt wird aus den Gruppen 3 bis 6 des periodischen Systems der Elemente, einer Organometallverbindung und gegebenenfalls einem Beschleuniger, dadurch gekennzeichnet, daß die Organometallverbindung in dem zu verwendenden Katalysatorsystem ein Amido-Komplex ist, der der folgenden allgemeinen Formel gehorcht:

$$R_u\text{-}Me^1\text{-}X^1_v\text{-}(NR^1R^2)_w \qquad (I)$$

worin $Me^1$ ein Metall ist, ausgewählt aus der Gruppe 1, 2, 12 oder 13 des periodischen Systems der Elemente, jedes R getrennt voneinander eine Kohlenwasserstoffgruppe mit 1 bis 20 C-Atomen repräsentiert, $NR^1R^2$ eine Amidogruppe ist, $R^1$ und $R^2$ verbrückt oder nicht verbrückt sind, wobei diese gleich oder unterschiedlich sein können und Wasserstoff oder eine Kohlenwasserstoffgruppe mit 1 bis 20 C-Atomen oder eine Gruppe der allge-

meinen Formel MR$^3_3$ darstellen, worin M ein Element ist, das ausgewählt worden ist aus der Gruppe 14 des periodischen Systems der Elemente, wobei R$^3$ getrennt davon Wasserstoff, eine Kohlenwasserstoffgruppe mit 1 bis 20 C-Atomen oder einer Gruppe darstellt, die ein Heteroatom enthält, wobei das Heteroatom ausgewählt worden ist aus der Gruppe, die N, O, P, S oder ein Halogen umfaßt, X$^1$ ein Halogenatom umfaßt, u+v+w=p und 0<w<p, p die Valenz von Me$^1$ darstellen.

2. Verfahren gemäß Anspruch 1, dadurch gekennzeichnet, daß Me$^1$ Aluminium ist.

3. Verfahren gemäß Anspruch 1 oder 2, dadurch gekennzeichnet, daß X$^1$ Chlor ist.

4. Verfahren gemäß irgendeinem der Ansprüche 1 bis 3, dadurch gekennzeichnet, daß w≥0,5 ist.

5. Verfahren gemäß irgendeinem der Ansprüche 1 bis 4, dadurch gekennzeichnet, daß in dem Katalysatorsystem eine zusätzliche Organometallverbindung der folgenden allgemeinen Formel vorhanden ist:

$$R^4{}_x\text{-Me}^2\text{-X}^2{}_{p\text{-}x}$$

worin Me$^2$ ausgewählt ist aus der Gruppe 1, 2, 12 oder 13 des periodischen Systems der Elemente, jedes R$^4$ getrennt Wasserstoff oder eine Kohlenwasserstoffgruppe mit 1 bis 20 C-Atomen darstellt, X$^2$ ein Halogenatom ist, x≤p ist und p die Valenz von Me$^2$ darstellt.

6. Verfahren gemäß Anspruch 5, dadurch gekennzeichnet, daß Me$^2$ Aluminium ist.

7. Verfahren gemäß Anspruch 5 oder 6, dadurch gekennzeichnet, daß X$^2$ Chlor ist.

8. Verfahren gemäß einem der Ansprüche 5 bis 7, dadurch gekennzeichnet, daß (II) x≥1 ist.

9. Verfahren gemäß einem der Ansprüche 1 bis 8, dadurch gekennzeichnet, daß das Übergangsmetall ausgewählt wird aus der Gruppe 5.

10. Verfahren gemäß Anspruch 9, dadurch gekennzeichnet, daß das Übergangsmetall Vanadium ist.

11. Verfahren gemäß einem der Ansprüche 1 bis 10, dadurch gekennzeichnet, daß, falls ein Beschleuniger anwesend ist, daß das molare Verhältnis von Beschleuniger zu Übergangsmetall < 4 ist.

12. Verfahren gemäß Anspruch 11, dadurch gekennzeichnet, daß das molare Verhältnis von Beschleuniger zu Übergangsmetall < 2 ist.

**Revendications**

1. Procédé pour la préparation d'un copolymère semblable au caoutchouc d'éthène, d'une ou de plus d'une α-oléfine et, facultativement, d'un ou de plus d'un composé polyinsaturé, ce polymère ayant une cristallinité, à la température ambiante et au-delà, d'au maximum 10 % (mesurée par calorimétrie différentielle), sous l'influence d'un système catalytique, comportant un composé de métal de transition, le métal de transition étant choisi dans les groupes 3-6 du Tableau Périodique des Eléments, d'un composé organométallique, et, facultativement, d'un promoteur, caractérisé en ce que le composé organométallique dans le système catalytique devant être utilisé est un complexe amido qui répond à la formule générale :

$$R_u\text{-Me}^1\text{-X}^1{}_v\text{-(NR}^1\text{R}^2)_w \tag{1}$$

dans laquelle Me$^1$ est un métal choisi dans le groupe 1, 2, 12 ou 13 du Tableau Périodique des Eléments, chaque R représente séparément un groupe hydrocarbure ayant de 1 à 20 atomes de carbone, NR$^1$-R$^2$ est un groupe amido, R$^1$ et R$^2$ pontés ou non-pontés, étant identiques ou différents et représentant de l'hydrogène ou un groupe hydrocarbure ayant de 1 à 20 atomes de carbone ou un groupe de la formule générale MR$^3_3$, dans laquelle M est un élément qui a été choisi dans le groupe 14 du Tableau Périodique des Eléments, chaque R$^3$ représente sépa-

rément de l'hydrogène, un groupe hydrocarbure ayant de 1 à 20 atomes de carbone ou un groupe renfermant un hétéroatome, l'hétéroatome ayant été choisi dans le groupe comprenant N, O, P, S ou un halogène, $X^1$ est un atome d'halogène, $u+v+w=p$ et $0<w<p$, p représentant la valence de $Me^1$.

2. Procédé selon la revendication 1, caractérisé en ce que $Me^1$ est de l'aluminium.

3. Procédé selon la revendication 1 ou 2, caractérisé en ce que $X^1$ est du chlore.

4. Procédé selon l'une quelconque des revendications 1 à 3, caractérisé en ce que $w \geq 0,5$.

5. Procédé selon l'une quelconque des revendications 1 à 4, caractérisé en ce que dans le système catalytique, est présent un composé organométallique supplémentaire de la formule générale suivante :

$$R^4{}_x\text{-}Me^2\text{-}X^2{}_{p-x} \qquad (II)$$

dans laquelle $Me^2$ est choisi dans le groupe 1, 2, 12 ou 13 du Tableau Périodique des Eléments, chaque $R^4$ représente séparément de l'hydrogène ou un groupe hydrocarbure ayant de 1 à 20 atomes de carbone, $X^2$ est un atome d'halogène, $x \leq p$, et p représente la valence de $Me^2$.

6. Procédé selon la revendication 5, caractérisé en ce que $Me^2$ est de l'aluminium.

7. Procédé selon la revendication 5 ou 6, caractérisé en ce que $X^2$ est du chlore.

8. Procédé selon l'une quelconque des revendications 5 à 7, caractérisé en ce que dans (II) $x \geq 1$.

9. Procédé selon l'une quelconque des revendications 1 à 8, caractérisé en ce que le métal de transition est choisi dans le groupe 5.

10. Procédé selon la revendication 9, caractérisé en ce que le métal de transition est du vanadium.

11. Procédé selon l'une quelconque des revendications 1 à 10, caractérisé en ce que, si un promoteur est présent, le rapport molaire promoteur:métal de transition est inférieur à 4.

12. Procédé selon la revendication 11, caractérisé en ce que le rapport molaire promoteur:métal de transition est inférieur à 2.

FIG. 3.1

EP 0 792 296 B1

FIG. 3.2

□ III.6    + III.5    ◇ III.4

log M

log M

□ III.7    + III.8

FIG. 3.3

EP 0 792 296 B1